(19) Europäisches Patentamt / European Patent Office / Office européen des brevets

(11) **EP 4 611 347 A1**

(12) **EUROPEAN PATENT APPLICATION**
published in accordance with Art. 153(4) EPC

(43) Date of publication:
03.09.2025 Bulletin 2025/36

(21) Application number: 23939306.9

(22) Date of filing: 28.11.2023

(51) International Patent Classification (IPC):
*H04L 65/613* (2022.01)

(52) Cooperative Patent Classification (CPC):
H04L 65/613; H04L 67/568

(86) International application number:
PCT/CN2023/134541

(87) International publication number:
WO 2024/244337 (05.12.2024 Gazette 2024/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 31.05.2023 CN 202310632510

(71) Applicant: Tencent Technology (Shenzhen)
Company Limited
Shenzhen, Guangdong 518057 (CN)

(72) Inventor: WU, Bo
Shenzhen, Guangdong 518057 (CN)

(74) Representative: AWA Sweden AB
Matrosgatan 1
Box 5117
200 71 Malmö (SE)

(54) **MEDIA DATA TRANSMISSION METHOD AND APPARATUS, AND ELECTRONIC DEVICE, STORAGE MEDIUM AND PROGRAM PRODUCT**

(57) Provided in the embodiments of the present application are a media data transmission method and apparatus, and an electronic device, a storage medium and a program product. The method comprises: acquiring a plurality of first media frames, sending respective traffic message sets of the plurality of first media frames to a data receiving end, and receiving at least one response message, which corresponds to the plurality of first media frames and is returned by the data receiving end; on the basis of the at least one response message, performing a first determination step regarding whether the data receiving end can receive media frame data of at least one of the first media frames; when a first determination result of the first determination step is positive, for each of the at least one of the first media frames, performing, according to a preset playing sequence of the plurality of first media frames, a second determination step regarding whether the data receiving end can play the at least one of the first media frames; on the basis of a second determination result of the second determination step, predicting a storage state of a storage unit of the data receiving end; and calling a corresponding preset data transmission scheme according to the storage state, so as to send second media frames to the data receiving end by using the data transmission scheme.

FIG. 3

**Description**

RELATED APPLICATION

The present disclosure claims priority to Chinese Patent Application No. 202310632510.X, filed with the China National Intellectual Property Administration on May 31, 2023 and entitled "AUDIO/VIDEO DATA TRANSMISSION METHOD AND RELATED APPARATUS".

FIELD OF THE TECHNOLOGY

The present disclosure relates to the field of communication technologies, and provides a method for transmitting media data, an apparatus, an electronic device, a storage medium, and a program product.

BACKGROUND OF THE DISCLOSURE

With continuous development of audio/video technologies, various forms of audio/video services such as the livestream service, audio/video on-demand service, and audio/video calls bring diversified user experience to users. However, audio/video services are mainly implemented by relying on a network transmission service. Therefore, the audio/video data transmission process is crucial.

Often, when transmitting audio/video data to a client, a data transmitting end adjusts an audio/video data transmission policy such as protocol improvement or congestion control according to a real-time network state (such as a packet loss rate or a delay), to ensure that the client receives complete audio/video data and ensure audio/video playing quality.

However, an audio/video playing effect of a client does not completely depend on network transmission performance, and may also be related to a cache status of a player of the client. If the data transmitting end adjusts the data transmission policy according to the network transmission performance only, data transmission efficiency and an audio playing effect are affected. In addition, due to the highly dynamic nature of player cache, the data transmitting end cannot assess the cache status of the player in the client in time. This makes it difficult for the data transmitting end to adjust the data transmission policy according to the cache status of the player, thereby affecting a traffic control effect.

SUMMARY

Embodiments of the present disclosure provide a method for transmitting media data, an apparatus, an electronic device, a storage medium, and a program product, to improve data transmission efficiency and audio/video playing quality.

According to an aspect, an embodiment of the present disclosure provides a method for transmitting media data, including:

transmitting a plurality of traffic packet sets each corresponding to one of a plurality of first media frames to a data receiving end, and receiving a response packet from the data receiving end, the response packet indicating media frame data of at least one first media frame is received by the data receiving end;

determining, according to a preset playing order of the plurality of first media frames, whether the data receiving end is capable of playing each of the at least one first media frame;

predicting a storage state of a storage unit of the data receiving end based on the determining; and

transmitting, by invoking a preset data transfer scheme corresponding to the storage state, a second media frame to the data receiving end through the data transfer scheme, the second media frame being different from the plurality of first media frames, or the second media frame comprising the at least one first media frame.

According to another aspect, an embodiment of the present disclosure provides an apparatus for transmitting media data, including:

a transceiving unit, configured to transmit a plurality of traffic packet sets each corresponding to one of a plurality of first media frames to a data receiving end, and receive a response packet from the data receiving end, the response packet indicating media frame data of at least one first media frame is received by the data receiving end;

a determining unit, configured to determine, according to a preset playing order of the plurality of first media frames, whether the data receiving end is capable of playing each of the at least one first media frame;

a prediction unit, configured to predict a storage state of a storage unit of the data receiving end based on the determining; and

a transfer scheme invoking unit, configured to transmit, by invoking a preset data transfer scheme corresponding to the storage state, a second media frame to the data receiving end through the data transfer scheme, the second media frame being different from the plurality of first media frames, or the second media frame comprising the at least one first media frame.

According to another aspect, an embodiment of the present disclosure provides an electronic device, including a processor and a memory, a computer program being stored in the memory, and the computer program, when executed by the processor, causing the processor to perform the operations of the method described above.

According to another aspect, an embodiment of the present disclosure provides a computer-readable storage medium, including a computer program, when the computer program is run on an electronic device, the computer program being used for causing the electronic device to perform the operations of the method described above.

According to another aspect, an embodiment of the present disclosure provides a computer program product, the program product including a computer program, the computer program being stored in a computer-readable storage medium, and a processor of an electronic device reading the computer program from the computer-readable storage medium and executing the computer program, to cause the electronic device to perform the operations of the method described above.

BRIEF DESCRIPTION OF THE DRAWINGS

The accompanying drawings described herein are used to provide a further understanding of the present disclosure, and form part of the present disclosure. Exemplary embodiments of the present disclosure and descriptions thereof are used to explain the present disclosure, and do not constitute any inappropriate limitation to the present disclosure. In the accompanying drawings:

FIG. 1 is a schematic diagram of a first application scenario according to an embodiment of the present disclosure;

FIG. 2 is a schematic diagram of a second application scenario according to an embodiment of the present disclosure;

FIG. 3 is a schematic flowchart of a method for transmitting media data according to an embodiment of the present disclosure;

FIG. 4 is a schematic diagram of a traffic packet according to an embodiment of the present disclosure;

FIG. 5 is a schematic diagram of a response packet according to an embodiment of the present disclosure;

FIG. 6A is a schematic diagram of detecting a complete frame according to an embodiment of the present disclosure;

FIG. 6B is a schematic diagram of detecting a complete frame according to another embodiment of the present disclosure;

FIG. 7 is a schematic diagram of a state information table update process according to an embodiment of the present disclosure;

FIG. 8 is a schematic diagram of a playing order according to an embodiment of the present disclosure;

FIG. 9 is a schematic diagram of logic of a buffering duration determining process according to an embodiment of the present disclosure;

FIG. 10 is a schematic diagram of respective data transfer schemes of two storage states according to an embodiment of the present disclosure;

FIG. 11 is a schematic diagram of another application scenario according to an embodiment of the present disclosure;

FIG. 12 is a schematic structural diagram of an apparatus for transmitting media data according to an embodiment of the present disclosure; and

FIG. 13 is a schematic structural diagram of an electronic device according to an embodiment of the present disclosure.

DESCRIPTION OF EMBODIMENTS

To make the objectives, technical solutions, and advantages of the embodiments of the present disclosure clearer, the technical solutions of the present disclosure are clearly and completely described below with reference to the accompanying drawings in the embodiments of the present disclosure. Clearly, the described embodiments are merely a part of the embodiments in the technical solutions of the present disclosure rather than all of the embodiments. All other embodiments obtained by a person of ordinary skill in the art based on the embodiments described in files of the present disclosure without creative efforts fall within the protection scope of technical solutions of the present disclosure.

Terms "first", "second", and the like in the specification, the claims, and the above-mentioned accompanying drawings of the present disclosure are intended to distinguish between similar users, but are not necessarily intended to describe a specific order or sequence. Data used in this way is exchangeable in a proper case, so that the embodiments of the present disclosure described herein can be implemented in an order different from the order shown or described herein.

During example application of the relevant data collection and processing in the present disclosure, the informed consent or individual consent of a personal information subject needs to be obtained in strict accordance with the requirements of relevant national laws and regulations, and the subsequent data use and processing behavior is carried out within the scope of authorization of laws and regulations and the personal information subject.

The cloud technology refers to a hosting technology that unifies hardware, software, network, and other resources in a wide area network or a local area network to achieve computation, storage, processing, and sharing of data. The cloud technology includes a network technology, an information technology, an integration technology, a management platform technology, an application technology, and the like that are applied based on a cloud computing business model, which can form a resource pool and be used on demand, thereby being flexible and convenient.

A background service of a technical network system requires a lot of computing and storage resources, for example, video websites, image websites, and more web portals. With the rapid development and application of the Internet industry, each item may have its own identification mark in the future, and the identification marks need to be transmitted to a background system for logical processing. Data of different levels is processed separately, and all kinds of industry data require a strong system support, which can be achieved only through cloud computing.

The cloud computing is a computing mode, in which computing tasks are distributed on a resource pool formed by a large number of computers, so that various application systems can obtain computing power, storage space, and information services according to requirements. A network providing resources is referred to as "cloud". For a user, the resources in the "cloud" seem to be infinitely expandable, and may be obtained readily, used on demand, expanded readily, and paid for use.

As a basic capability provider of cloud computing, a cloud computing resource pool (cloud platform for short, and generally referred to as an infrastructure as a service (IaaS)) platform is established, and multiple types of virtual resources are deployed in the resource pool, to be selected and used by an external customer. The cloud computing resource pool mainly includes a computing device (which is a virtualization machine, and includes an operating system), a storage device, and a network device.

According to logical function division, a platform as a service (PaaS) layer may be deployed on an IaaS layer, and a software as a service (SaaS) layer may be deployed on the PaaS layer, or a SaaS may be directly deployed on an IaaS. The PaaS is a platform for software running, such as a database or a web container. The SaaS is various types of service software, such as a web portal and a short message service group sender. Generally, the SaaS and the PaaS are upper layers relative to IaaS.

With continuous development of audio/video technologies, various forms of audio/video services such as a livestream service, an audio/video on-demand service, and an audio/video call bring diversified user experience to users. However, audio/video services are mainly implemented by relying on a network transmission service. Therefore, an audio/video data transmission process is crucial.

In a related technology, when transmitting audio/video data to a data receiving end, a data transmitting end adjusts an audio/video data transmission policy in a mode such as protocol improvement or congestion control according to a real-time network state (such as a packet loss rate or a delay), to ensure that the data receiving end receives complete audio/video data and ensure audio/video playing quality.

However, an audio/video playing effect of a client in the data receiving end does not completely depend on network transmission performance, and may also be related to a cache status of a player in the client. If the data transmitting end adjusts the data transmission policy according to the network transmission performance only, it may not be an effective policy, may severely affect data transmission efficiency and an audio playing effect. In addition, due to the highly dynamic nature of player cache, the data transmitting end cannot perceive the cache status of the player in the client in time. This makes it difficult for the data transmitting end to adjust the data transmission policy according to the cache status of the player, thereby affecting a traffic control effect.

For example, a packet loss occurs during transmission of audio/video data. If there is a small volume of data that can be buffered in the cache of the player in the client, even if a packet is retransmitted according to the network transmission performance, when the lost packet is retransmitted to the client in the data receiving end, the playing may be lagged because the client has no cached data, or buffered data.

In the embodiments of the present disclosure including the embodiments of both the claims and the specification (hereinafter referred to as "all embodiments of the present disclosure"), the data transmitting end may transmit a plurality of traffic packet sets each corresponding to one of a plurality of first media frames to a data receiving end, and receive a response packet from the data receiving end, the response packet indicating the data receiving end is capable of receiving media frame data of at least one first media frame; determine, according to a preset playing order of the plurality of first media frames, whether the data receiving end is capable of playing each of the at least one first media frame; predict a storage state of a storage unit of the data receiving end based on the determining; and transmit, by invoking a preset data transfer scheme corresponding to the storage state, a second media frame to the data receiving end through the data transfer scheme, the second media frame being different from the plurality of first media frames, or the second media frame comprising the at least one first media frame.

In this way, the data transmitting end determines, through the response packet, a first media frame, which is completely received by the client, among the first media frames, and predicts a playable frame that can be completely played by the client, thereby endowing the data transmitting end with a capability of predicting cache information of the player in the client, and adjusting the data transmission policy in time and effectively according to predicted cache information of the player. This improves data transmission efficiency and an audio/video playing effect. In addition, subsequent data transmission is performed based on the data transfer scheme preset for the storage state (for example, a state with sufficient available cache or a state with insufficient available cache), so that service experience requirements of the client in a live audio/video scenario can be better met, thereby improving audio/video service quality of a service provider, and further improving user experience.

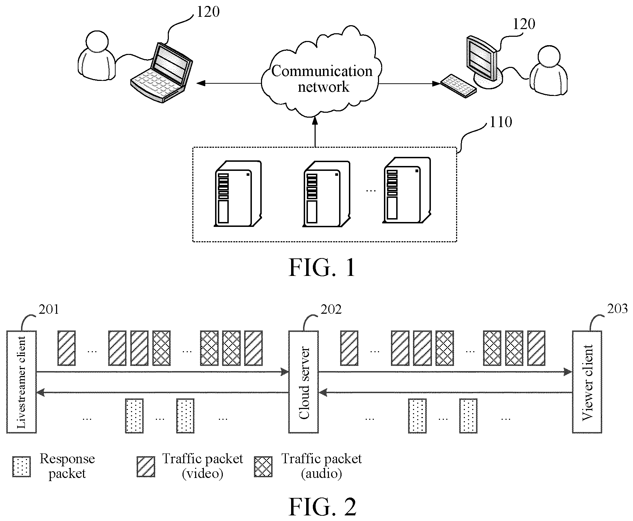

FIG. 1 is a schematic diagram of a possible application scenario according to an embodiment of the present disclosure. A data transmitting end 110 and a data receiving end 120 are included in the scenario.

The data transmitting end 110 may be an independent physical server, or a server cluster or distributed system including a plurality of physical servers, or may be a cloud server providing basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform. The terminal may be a smartphone, a tablet computer, a notebook computer, a desktop computer, a smart speaker, a smartwatch, and the like, but is not limited thereto.

The data receiving end 120 may be a terminal with audio/video playing requirements. The terminal may be a smartphone, a tablet computer, a notebook computer, a desktop computer, a smart speaker, a smart television, a smartwatch, or the like, but is not limited thereto. A client configured to play a media frame (including an audio frame and a video frame) is installed in the data receiving end 120.

The data transmitting end 110 and the data receiving end 120 may be connected directly or indirectly in a wired or wireless communication manner. This is not limited in the present disclosure.

In all embodiments of the present disclosure, the data transmitting end 110 transmits a traffic packet set of each first media frame to the data receiving end 120, receives a response packet (e.g., one response packet corresponding to the first media frames, a plurality of response packets each corresponding to one of the first media frames, or a plurality of response packets each corresponding to one of the traffic packets in the traffic packet set) returned by the data receiving end 120, and then detects, when it is determined, based on the response packet, that the data receiving end 120 receives at least one first media frame, whether the client in the data receiving end 120 is capable of playing the at least one first media frame based on the playing order of the plurality of first media frames; and then predicts the storage state of the cache in the player of the client and transmits the second media frame to the data receiving end 120 through the data transfer scheme preset for the storage state.

In all embodiments of the present disclosure, the method for transmitting media data may be applied to various audio/video data transmission scenarios, for example, a live streaming scenario, an instant messaging scenario, and an online conference scenario, but is not limited thereto.

Referring to FIG. 2, taking a live streaming scenario as an example, a livestreamer client 201, a cloud server 202, and a viewer client 203 are included in the live streaming scenario. The livestreamer client 201 obtains each piece of audio/video data through a device having an audio/video recording function, encodes each piece of audio/video data, and uploads each piece of encoded audio/video data to the cloud server 202. After receiving each piece of encoded audio/video data, the cloud server 202 obtains each piece of audio/video data through decoding, and may generate first audio/video frames with at least one bit rates (namely definitions) in a form of encoding for at least one times.

When receiving a viewing request from a viewer client 203, the cloud server 202 transmits a traffic packet set carrying each first audio/video frame with a specified bit rate to the viewer client 203, determines, according to one response packet or each of a plurality of response packets returned by the viewer client 203, a second audio/video frame completely received by the viewer client 203, predicts a playable second audio/video frame supporting complete playing by the viewer client 203, and then predicts and obtains a storage state of the viewer client 203 according to the second audio/video frame completely received by the viewer client 203 and the playable second audio/video frame supporting complete playing by the viewer client 203.

Finally, the cloud server 202 transmits a third audio/video frame to the viewer client 203 through the data transfer scheme preset for the storage state.

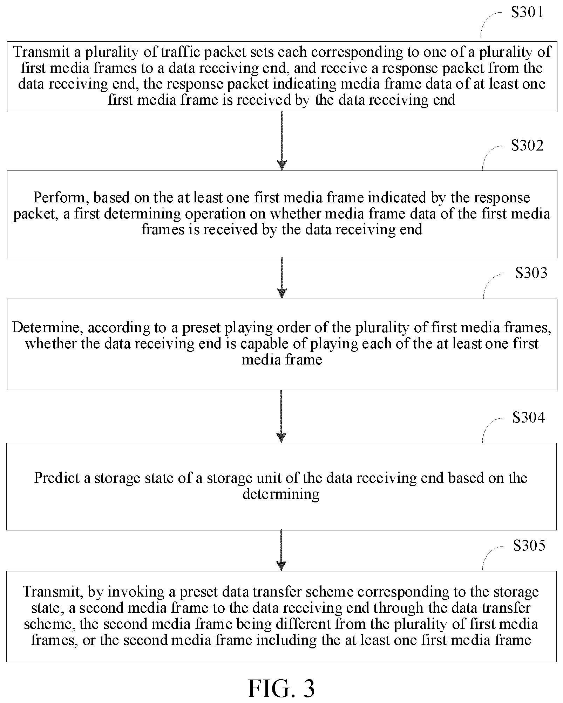

FIG. 3 is a schematic flowchart of a method for transmitting media data according to an embodiment of the present disclosure. The procedure is applied to an electronic device used as a data transmitting end. For example, the data transmitting end is a server 110 shown in FIG. 1. A data receiving end may include a viewing client (or may be directly referred to as a client). A specific procedure is as follows:

S301: Transmit a plurality of traffic packet sets each corresponding to one of a plurality of first media frames to a data receiving end, and receive a response packet from the data receiving end, the response packet indicating media frame data of at least one first media frame is received by the data receiving end.

In this step, the data transmitting end may obtain a plurality of first media frames, transmit traffic packet sets each corresponding to one of the plurality of first media frames to a data receiving end, and receive at least one response packet corresponding to the plurality of first media frames and returned by the data receiving end.

In all embodiments of the present disclosure, a media frame refers to an audio/video frame. The audio/video frame may refer to an audio frame, a video frame, or a combination thereof. This is not limited. Each first media frame corresponds to a traffic packet set. The traffic packet set includes at least one traffic packet, and a first media frame is transmitted by transmitting the at least one traffic packet.

In a live streaming scenario, each first media frame obtained by the server may be transmitted by the livestreamer client to the server. Referring to FIG. 2, when the server receives a viewing request from the viewer client, the server transmits a traffic packet set of each first audio/video frame to the viewer client, and receives each response packet returned by the viewer client. In all embodiments of the present disclosure, a data transmission process between the livestreamer client and the server is not limited, and details are not described herein.

After obtaining each first media frame, the server may further identify a playing time or a frame type (frame_type) of each first media frame.

In all embodiments of the present disclosure, the media frames are preferably configured as audio/video frames. A playing time of each audio/video frame may be represented by a presentation time stamp (pts). The pts is a relative time stamp, usually in milliseconds (ms). The pts is configured for representing a playing time of the audio/video frame in the client relative to a playing time of the first audio/video frame in the client. For example, the pts of the first audio/video frame is 0. Therefore, when the pts of an audio/video frame is 1, it indicates that the audio/video frame is an audio/video frame played 1 ms after the first audio/video frame is played.

The pts of each audio/video frames may be obtained based on an audio/video protocol used. The audio/video protocol includes, but is not limited to, a streaming media format (flash video (FLV)) protocol. Using the FLV protocol as an example, in an FLV file of each audio/video frame, the pts of the audio/video frame is recorded in a "Timestamps" field in a tag header.

In all embodiments of the present disclosure, the frame_type of each audio/video frame is preferably configured for representing a frame type corresponding to the audio/video frame. The frame types include, but are not limited to, audio frames and video frames. For video frames, video frame types may be further subdivided into key frames and non-key frames. The key frames are video I frames, and the non-key frames include video P frames and video B frames. A video I frame does not depend on information of another frame. A video P frame depends on a previous I frame or P frame. A video B frame depends on an adjacent I frame or P frame.

The frame_type of each audio/video frame may be obtained based on an audio/video protocol used. Still using the FLV protocol as an example, in an FLV file of each audio/video frame, a frame type of the audio/video frame is recorded in a Type field in a tag header. For example, when a value of the Type field is 0x08, it indicates that the audio/video frame is an audio frame, or when the value of the Type field is 0x09, it indicates that the audio/video frame is a video frame. For a video frame, when a value of the frame_type field in tag data is 2, it indicates that the video frame is a non-key frame, or when the value of the frame_type field is 1, it indicates that the video frame is a key frame.

In all embodiments of the present disclosure, referring to Table 1, the server may further maintain a state information table for each audio/video frame. The state information table includes at least one of a frame type (frame_type), a playing time (pts), a packet identifier (Pkt_num), complete reception (Rcv_bool), and complete playing (Play_bool).

Table 1 State information table

| Frame type frame_type | Playing time pts | packet identifier Pkt_num | Complete reception Rev_bool | Complete playing Play_bool |
|---|---|---|---|---|
| Audio frame/ video frame (I/P/B) | For example, 1 ms | packet identifier of a traffic packet, for example, 50, 51, ..., or 60 | 1: complete reception; 0: incomplete reception | 1: the audio/video frame can be completely played; 0: the audio/video frame cannot be completely played |

In Table 1, the Pkt_numfield of each audio/video frame includes a packet identifier Pkt_num of each traffic packet in a traffic packet set of the audio/video frame. In all embodiments of the present disclosure, the server may preferably transmit an audio/video frame through at least one traffic packets. The Pkt_num field in Table 1 is configured for recording specific traffic packets by which an audio/video frame is transmitted. In the Pkt_num field, an initial value of each Pkt_num may be null, and content of the Pkt_num field may be updated after some or all traffic packets in the traffic packet set of the audio/video frame are transmitted.

In all embodiments of the present disclosure, an Rev_bool field of each audio/video frame is preferably configured for representing whether the audio/video frame can be completely received by the data receiving end. In all embodiments of the present disclosure, the so-called "complete reception" means that the data receiving end receives complete data of an audio/video frame. An initial value of the Rcv_bool field may be a set value (for example, 0) indicating that an audio/video frame cannot be completely received. For update of content of the Rcv_bool field, refer to operation S302.

In all embodiments of the present disclosure, a Play_bool field of each audio/video frame is configured for indicating whether the audio/video frame can be completely played by the client. In all embodiments of the present disclosure, "complete playing" means that the client is capable of playing complete data of an audio/video frame. An initial value of the Play_bool field may be a set value (for example, 0) indicating that an audio/video frame cannot be completely played.

In all embodiments of the present disclosure, after obtaining each first audio/video frame, and before transmitting a traffic packet set of each first audio/video frame to the client, the server may further detect whether a predicted storage state (namely a historical cache storage state) of the cache in the player exists. If no historical cache storage state exists, or an existing historical cache storage state does not meet a condition of sufficient cache occupation or a condition of insufficient cache occupation, the server transmits a traffic packet of each first audio/video frame to a network according to a transmission parameter calculated in a congestion control mode.

In all embodiments of the present disclosure, in the congestion control mode, on one hand, the server may perform data transmission by an optimization protocol. The optimization protocol includes, but is not limited to, quick user datagram protocol (UDP) Internet Connections (QUIC), a multipath transport protocol, and the like. The multipath transport protocol includes, but is not limited to, a transport control protocol (TCP)-based multipath TCP (MPTCP) and a QUIC-based multipath QUIC (MPQUIC).

The QUIC protocol can solve, to a large extent, a problem faced by the existing widely-deployed TCP. While improving traffic transmission performance, the QUIC protocol uses hypertext transfer protocol 2.0 (HTTP2) multiplexing, hypertext transfer protocol secure (HTTPS) security, and TCP reliability. Multipath transmission (such as the MPTCP or the MPQUIC) solves a problem of too low transmission performance caused by limited transmission resources faced by the existing TCP and QUIC protocol on a single path. A new transmission path is newly added, so that a problem that audio/video traffic cannot arrive at a terminal in time during traffic transmission and packet loss repair is solved, thereby greatly improving traffic transmission efficiency.

On the other hand, the server may sense a congestion degree and a transmission resource capability of an intermediate network, and adjust, according to sensed information, a data transfer scheme such as traffic transmission and retransmission in case of a packet loss. For example, the server may determine, according to a packet loss through a TCP congestion control algorithm (Reno algorithm), whether an intermediate network is congested; determine, according to a traffic transmission delay through a Timely algorithm, whether the intermediate network is congested; and calculate an available transmission resource (namely available network bandwidth) of the intermediate network through a bottleneck bandwidth and round-trip time (RTT) (BBR)-based congestion control algorithm and based on a network modeling method. These algorithms determine the congestion degree of the intermediate network according to different signals, and further adjust a transmission window or a transmission rate of a transmitting end to fully use resources of the intermediate network "as far as possible", to improve network transmission efficiency, so as to improve service experience of a terminal.

In all embodiments of the present disclosure, if the existing historical cache storage state meets the condition of sufficient cache occupation or the condition of insufficient cache occupation, a target transmission parameter is calculated according to the data transfer scheme in operation S305, for example, a congestion control mode, and the traffic packet of the second media frame is transmitted to the data receiving end by using the target transmission parameter. For details, refer to operation S305.

In all embodiments of the present disclosure, after the server transmits a traffic packet set of each first audio/video frame to the client, for each first audio/video frame, a packet identifier Pkt_num of each traffic packet in the traffic packet set of the audio/video frame is filled in a Pkt_num column in Table 1.

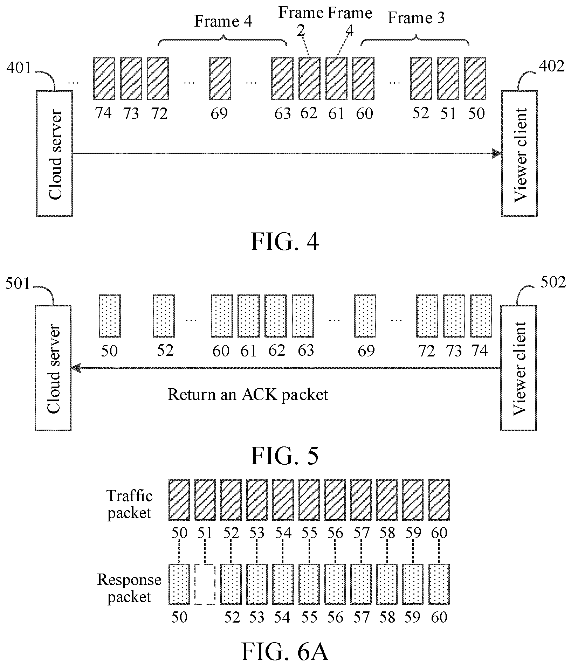

For example, a media frame is a video frame. Referring to FIG. 4, it is assumed that a first video frame includes a frame 3, a frame 4, and the like. In Table 1, a frame type of the frame 3 is a video frame, specifically, a video P frame, and pts = 30. That is, the video frame is played 30 ms after a viewer client 402 plays the first video frame, and Pkt_num includes: 50, 51, ..., and 60. That is, the video frame is transmitted by using traffic packets whose packet identifiers are 50, 51, ..., and 60. In Table 1, the frame 4 is a video B frame, and pts = 31. That is, the video frame is played 31 ms after the viewer client 402 plays the first video frame, and Pkt_num includes: 61, 63, 64, ..., and 72. That is, the video frame is transmitted through traffic packets whose packet identifiers are 61, 63, 64, ..., and 72.

In all embodiments of the present disclosure, in the Pkt_num column in Table 1, the first bit of each Pkt_num is used for representing whether the traffic packet is a retransmitted packet. For example, if the traffic packet is a retransmitted packet, a value of the first bit is a binary number 1, otherwise, the value of the first bit is a binary number 0. When the value of the first bit of Pkt_num is a binary number 1, remaining m bits of Pkt_num respectively represent a packet identifiers of an original traffic packet and a packet identifier of a retransmitted traffic packet. The packet identifier of the retransmitted traffic packet may be indicated by a relative number of the traffic packet in each traffic packet corresponding to an audio/video frame, or may be directly indicated by the packet identifier of the traffic packet. This is not limited.

For example, it is assumed that in Table 1, a Pkt_num column of the frame 2 includes the following Pkt_num: {0, 40}, {0, 41}, ..., {0, 49}, and {1, 1, 62}, where {0, 40} indicates a traffic packet whose packet identifier is 40, {0, 41} indicates a traffic packet whose packet identifier is 41, {0, 49} indicates a traffic packet whose packet identifier is 49, and {1, 1, 62} indicates that packet identifiers of a retransmitted packet and an original traffic packet are 1 and the packet identifier of a retransmitted traffic packet is 62. That is, it indicates that the traffic packet whose packet identifier is 62 is a retransmitted packet of the first traffic packet (namely the traffic packet whose packet identifier is 40). The traffic packet whose packet identifier is 62 is used for repairing a loss of the first traffic packet in the frame 2.

In all embodiments of the present disclosure, after receiving the traffic packet in the traffic packet set of each first media frame transmitted by the server, the data receiving end returns a response packet (or at least one response packet) to the server. The response packet may carry a packet identifier of at least one received traffic packets. The response packet may indicate, through the packet identifier, that the data receiving end has received a corresponding traffic packet, or receives no corresponding traffic packet.

In all embodiments of the present disclosure, when the data receiving end returns the response packet, there may be preferably one response packet or a plurality of response packets, including the following:

each received traffic packet corresponds to one response packet, the response packet carrying a packet identifier of the traffic packet; or

one first media frame corresponds to one response packet, where the response packet carries at least one packet identifier each corresponding to one of at least one traffic packet received in a traffic packet set of the first media frame; and

a plurality of first media frames correspond to one response packet, where the response packet carrying at least one packet identifier each corresponding to one of at least one traffic packet received in a traffic packet set of each of the first media frames.

Descriptions are provided below by using an example in which the response packet is used for indicating that the data receiving end has received a corresponding traffic packet.

In all embodiments of the present disclosure, the response packet is preferably an acknowledgement (ACK) packet, as shown in FIG. 5, used for indicating that a viewer client 502 has received corresponding traffic packets. Each ACK packet carries a packet identifier of one traffic packet. After receiving traffic packets whose packet identifiers are 50, 51, 52, ..., and 74 and that are transmitted by a cloud server 501, the viewer client 502 returns response packets respectively carrying the packet identifiers 50, 51, 52, ..., and 74 to the cloud server 501, to indicate to the cloud server 501 that a data receiving end of the viewer client 502 has received the traffic packets whose packet identifiers are 50, 51, 52, ..., and 74.

In all embodiments of the present disclosure, after step S301 and before step S303, step S02 may be preferably configured.

S302: Perform, based on the at least one first media frame indicated by the response packet, a first determining operation on whether media frame data of the first media frames is received by the data receiving end.

In all embodiments of the present disclosure, the "first determining operation" preferably refers to determining whether the data receiving end can completely receive media frame data of the first media frames, including the at least one first media frame.

In some embodiments of the present disclosure, the "first determining operation" is preferably configured to perform the first determining operation frame by frame based on a packet identifier carried in the response packet or the plurality of response packets described above, to correspondingly obtain a determining result, namely "received/not received" or "yes/no", of each first media frame.

In some embodiments of the present disclosure, the "first determining operation" is preferably configured to determine, one by one with a packet identifier carried in the response packet or the plurality of response packets described above, whether all packets in the traffic packet set of each first media frame are received.

In all embodiments of the present disclosure, after the server receives the at least one response packet, for each of the at least one response packet, the server detects, based on a packet identifier carried in each response packet, whether the client receives each first audio/video frame, and may use at least one first audio/video frame received by the client as a second audio/video frame.

In all embodiments of the present disclosure, the so-called "receiving" refers to receiving a frame of complete packet data. The second audio/video frame is also referred to as a "complete frame", that is, a frame of complete packet data is received.

In all embodiments of the present disclosure, the server detecting, based on the response packet, whether the data receiving end receives each first media frame including:

obtaining a packet identifier set recorded locally for each of the first media frames, the packet identifier set comprising a plurality of packet identifiers each corresponding to one of a plurality of traffic packets in a traffic packet set of the first media frame, and the plurality of packet identifiers being obtained by numbering according to a transmission order of the plurality of traffic packets; and

determining that the data receiving end receives media frame data of the at least one first media frame, based on the plurality of packet identifiers comprised in each packet identifier set and a plurality of packet identifiers carried by the response packet.

In all embodiments of the present disclosure, when the first media frame is an audio/video frame, a packet identifier of each packet in a packet identifier set of the audio/video frame x is recorded in the Pkt_num column in Table 1. After obtaining the response packet, the server determines that the audio/video frame x is received, when determining, based on a packet identifier carried in the response packet, that the data receiving end receives each traffic packet of the audio/video frame x, and uses the audio/video frame x as a complete frame.

For example, as shown in FIG. 6A, a frame 3 is transmitted through traffic packets whose packet identifiers are respectively 50, 51, ..., and 60. Among response packets (such as ACK packets) received by the server, it is determined, based on the packet identifiers 50, 52, ..., and 60 carried in the ACK packets, that ACK packets on that the data receiving end has received the traffic packets whose packet identifiers are 50, 52, ..., and 60 exist, but there is a lack of an ACK packet carrying the packet identifier 51 and not received by the server, namely an ACK packet on determining that the data receiving end receives no traffic packet whose packet identifier is 51. In this case, the server determines that the data receiving end of the client receives no frame 3, and the frame 3 is not a complete frame.

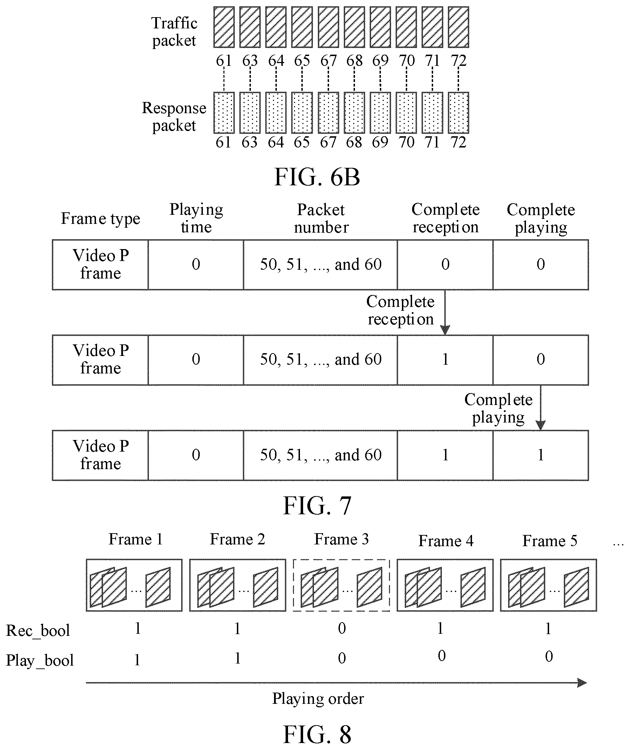

For another example, as shown in FIG. 6B, the frame 4 is transmitted through traffic packets whose packet identifiers are 63, 64, ..., and 72. If the response packets received by the server carry the identifiers 63, 64, ..., and 72 respectively, it is determined that the data receiving end has received the traffic packets whose packet identifiers are 63, 64, ..., and 72, it is determined that the data receiving end receives the frame 4, and the frame 4 is used as a complete frame.

In all embodiments of the present disclosure, if the server determines that all traffic packets of an audio/video frame are received by the data receiving end, the server may set a value of Rcv_bool of the frame in the state information table shown in Table 1 to 1. That is, if the server determines that the audio/video frame x is a complete frame, the server sets a value of an Rev_bool field in Table 1 to 1.

S303: Determine, according to a preset playing order of the plurality of first media frames, whether the data receiving end is capable of playing each of the at least one first media frame.

In all embodiments of the present disclosure, the data transmitting end may preferably perform, for each of the at least one first media frame according to a preset playing order of the plurality of first media frames, a second determining operation on whether the data receiving end is capable of playing the at least one first media frame, when a determining result of the first determining operation is positive.

In all embodiments of the present disclosure, the second determining operation is preferably performed frame by frame for each of the at least one first media frame according to the preset playing order. That is, a corresponding second determining result is obtained from each first media frame. Therefore, at least one second determining result is obtained. When the second determining result is indicated as "Yes/no", at least one "Yes/no" is obtained. "The determining result is positive" indicates that the data receiving end can (for example, completely) receive (for example, all) media frame data of the at least one first media frame. For example, referring to a state information table of a frame 3 shown in FIG. 7, when the server determines that the frame 3 is a complete frame, the server sets a value of an Rev_bool field (namely complete reception) in Table 1 from 0 to 1.

In all embodiments of the present disclosure, a client configured to play media is installed in the data receiving end, and "whether the data receiving end is capable of playing" specifically refers to whether the client is capable of playing. For example, when a video application client (for example, Tencent Video) runs on the data receiving end (for example, a mobile phone), whether the video application client is capable of playing at least one first media frame is determined by the second determining operation.

Further, if the server determines that the frame 3 is a playable frame supporting complete playing by the client, a value of a Play_bool field (namely complete playing) in Table 1 is set from 0 to 1.

In all embodiments of the present disclosure, when detecting that an audio/video frame is completely received by the data receiving end, the server further detects whether the audio/video frame can be played by the client.

In some embodiments of the present disclosure, whether the audio/video frame can be played by the client preferably means that all data in the media frame can be played by the client, that is, can be completely played by the client.

In some embodiments of the present disclosure, whether the audio/video frame can be played by the client preferably means that some data in the media frame can be played. Specifically, if a percentage of data in the first media frame that can be played by the client is greater than a preset threshold, it is considered that the media frame can be played by the client.

Specifically, the server performs the following operations on each of the at least one first media frame:

detecting, when it is determined based on the playing order that at least one other media frame that is before the respective first media frame exists among the plurality of first media frames, whether the data receiving end is capable of playing the respective first media frame, based on a first determining result of the first determining operation respectively corresponding to the at least one other media frame.

In some embodiments of the present disclosure, whether the data receiving end is capable of playing may be preferably whether the client in the data receiving end is capable of playing.

According to the foregoing embodiment, when it is detected that an audio/video frame is completely received by the data receiving end, it can represent that current network state information, namely transmission, is reliable. Based on this, further detecting whether the client is capable of playing the audio/video frame is used to determine information about caching of the audio/video frame by the client. Therefore, on the whole, a traffic transmission and control method of effective "linkage" between the information about caching of the audio/video frame by the client and the network state information is implemented. Linkage adjustment of the audio/video application and the network state information improves user experience of an existing Internet service primarily focused on audio/video live streaming, and improves a transmission capability of a content distributed network.

In all embodiments of the present disclosure, the preset playing order of the plurality of first media frames can be preferably obtained from the data transmitting end when the server receives the plurality of first media frames.

The audio/video frame x has been completely received by the data receiving end. Still using the audio/video frame x as an example, a process of detecting whether an audio/video frame can be completely played by the client is described.

In some embodiments of the present disclosure, when it is determined, based on the playing order of the audio/video frames, that there is no other media frame before the audio/video frame x among the audio/video frames, that is, when the audio/video frame x is the first frame, the audio/video frame x may be directly considered as a playable frame supporting complete playing by the client.

In some embodiments of the present disclosure, when it is determined, based on the playing order of the audio/video frames, that there is at least one other media frame before the audio/video frame x among the audio/video frames, it is detected, based on a first determining result(s) respectively corresponding to the at least one other media frame, whether the audio/video frame x is a playable frame that supports complete playing by the client.

In all embodiments of the present disclosure, the detecting whether the data receiving end is capable of playing the respective first media frame, based on a first determining result of the first determining operation respectively corresponding to the at least one other media frame includes:

determining that a client running in the data receiving end is capable of playing the respective first media frame, when it is determined, based on the first determining result respectively corresponding to the at least one other media frame, that the data receiving end receives each of the at least one other media frame, or

determining that the client is incapable of playing the respective first media frame, when it is determined, based on the first determining result respectively corresponding to the at least one other media frame, that a media frame in the at least one other media frame is not received by the data receiving end.

For example, as shown in FIG. 8, a playing order of video frames is: a frame 1, a frame 2, a frame 3, a frame 4, a frame 5, and the like. The frame 1, the frame 2, the frame 4, and the frame 5 are complete frames, that is, values of corresponding Rec_bool fields are 1. The frame 3 is not a complete frame, that is, a value of a corresponding Rec_bool field is 0. For the frame 1, there is no other media frame before the frame 1 among the audio/video frames, and the frame 1 is directly considered as a playable frame that supports complete playing by the client, that is, a value of a corresponding Play_bool field is 1. For the frame 2, there is a frame 1 before the frame 2 among the audio/video frames. Therefore, it may be detected, based on a first determining result of the frame 1, whether the frame 2 is a playable frame that supports complete playing by the client. Similarly, for the frame 4, it is detected, based on respective first determining results of the frame 1, the frame 2, and the frame 3, whether the frame 4 is a playable frame that supports complete playing by the client. For the frame 5, it is detected, based on respective first determining results of the frame 1, the frame 2, the frame 3, and the frame 4, whether the frame 1, the frame 2, the frame 3, and the frame 4 are playable frames that support complete playing by the client.

In all embodiments of the present disclosure, when it is detected, based on a first determining result(s) respectively corresponding to at least one other media frame, whether the client is capable of playing the audio/video frame x, if it is determined, based on the first determining result(s) respectively corresponding to the at least one other media frame, that each of the at least one other media frame is a playable frame, it is determined that the client is capable of playing the audio/video frame x, or the audio/video frame x is a playable frame supporting complete playing by the client. In all embodiments of the present disclosure, when it is determined that the at least one other media frame is a complete frame, each of the at least one other media frame is a playable frame.

In all embodiments of the present disclosure, if it is determined, based on the first determining result(s) respectively corresponding to the at least one other media frame, that a media frame that is not received by the data receiving end exists in the at least one other media frame, it is determined that the client cannot play the audio/video frame x, or it is determined that the audio/video frame x is not a playable frame supporting complete playing by the client.

In some embodiments of the present disclosure, whether the data receiving end is capable of playing the first media frame may alternatively be detected based on a second determining result corresponding to the at least one other media frame. The second determining result corresponding to the at least one other media frame may be determined through a Play_bool field of the at least one other media frame. For example, when a value of Play_bool is 1, it represents that a corresponding frame is a playable frame supporting complete playing by the client, or when the value of Play_bool is 0, it represents that a corresponding frame is not a playable frame supporting complete playing by the client.

Still referring to FIG. 8, only the frame 2 and the frame 5 are used as an example for description. The server determines, based on a second determining result of the frame 1 (a value of Play_bool of the frame 1 is 1), that the frame 2 is a playable frame supporting complete playing by the client, that is, a value of a corresponding Play_bool field is 1. The server is based on respective second determining results of the frame 1, the frame 2, the frame 3, and the frame 4. Values of Play_bool of the frame 1 and the frame 2 are both 1, and values of Play_bool of the frame 3 and the frame 4 are both 0. That is, the frame 1 and the frame 2 are both playable frames that support complete playing by the client, but the frame 3 and the frame 4 are not playable frames. Therefore, the frame 5 is not a playable frame that supports complete playing by the client, that is, values of Play_bool fields corresponding to the frame 3, the frame 4, and the frame 5 are all 1.

Whether an audio frame and a video frame support complete playing by the client is separately described below.

If the audio/video frame x is an audio frame, the server determines, based on a playing order of audio frames, whether there is another media frame before the audio frame x in each audio frame, and if not (that is, the audio frame x is the first frame), the audio frame x is a playable frame that supports complete playing by the client, or if yes (that is, the audio frame x is not the first frame), the server further detects, based on a second determining result corresponding to at least one other media frame, whether the audio frame x is a playable frame that supports complete playing by the client. In a further detection process, if Play_bool corresponding to the at least one other media frame is 1, it is determined that the audio frame x is a playable frame that supports complete playing by the client, or if Play_bool respectively corresponding to the at least one other media frame is not 1, it is determined that the audio frame x is not a playable frame that supports complete playing by the client.

If the audio/video frame x is a video I frame, when the audio/video frame x meets any one of the following conditions, it is determined that the audio/video frame x is a playable frame that supports complete playing by the client.

Condition 1: There is no I frame, P frame, or B frame before the video I frame. That is, there is no other media frame before the video I frame among the audio/video frames.

Condition 2: Play_bool of all video frames before the video I frame is 1. That is, Play_bool corresponding to at least one other media frame before the video I frame is 1.

If the audio/video frame x is a video P frame, when Play_bool of all I frames, P frames, and B frames before the video P frame is all 1, it is determined that the audio/video frame x is a playable frame supporting complete playing by the client.

If the audio/video frame x is a video B frame, when Play_bool of all I frames, P frames, and B frames before the video P frame is all 1, it is determined that the audio/video frame x is a playable frame supporting complete playing by the client.

Further, When it is determined that the audio/video frame x is a playable frame that supports complete playing by the client, Play_bool of the audio/video frame x is set to 1, otherwise, Play_bool of the audio/video frame x remains 0.

In all embodiments of the present disclosure, the playing order of the plurality of first media frames may be determined including:

obtaining a packet identifier set recorded locally for each of the first media frames, the packet identifier set comprising a plurality of packet identifiers each corresponding to one of a plurality of traffic packets in a traffic packet set of the first media frame, and the plurality of packet identifiers being obtained by numbering according to a transmission order of the plurality of traffic packets; and

determining the playing order based on the plurality of packet identifiers comprised in each packet identifier set.

For example, in the playing order, if a minimum packet number of an audio/video frame is less than a minimum packet number of another audio/video frame, the audio/video frame is before the another audio/video frame. That is, referring to Table 1, a "sequential" order of audio/video frames may be determined based on the minimum packet identifiers Pkt_num corresponding to the audio/video frames. Specifically, If a minimum Pkt_num of a frame (a frame a) is less than a minimum Pkt_num of another frame (a frame b), it indicates that the frame a is before the frame b. For example, Pkt_num of the frame a includes: 50, 51, 52, ..., and 60, and Pkt_num of the frame b includes: 61, 62, 63, ..., and 66. A minimum Pkt_num of the frame a, which is 50, is less than a minimum Pkt_num of another frame (the frame b), which is 61. Therefore, it indicates that the frame a is before the frame b.

S304: Predict a storage state of a storage unit of the data receiving end based on the determining.

In all embodiments of the present disclosure, when playing a media frame, the data receiving end needs to use the storage unit. For example, when a client running on the data receiving end plays a media frame, an operating system of the data receiving end allocates a cache unit to the client, and the client caches the to-be-played media frame by the cache unit, so as to facilitate rapid reading and smooth playing. Therefore, the predicted storage state refers to a storage state, in the data receiving end, of a cache allocated to the client running on the data receiving end.

In all embodiments of the present disclosure, the server predicts a storage state of a storage unit of the data receiving end based on the determining preferably includes:

obtaining cache usage data based on the determining and a media frame currently played by the data receiving end; and

determining the storage state based on the cache usage data.

In all embodiments of the present disclosure, the storage state may preferably include a state of insufficient cache occupation (indicating that the current client player caches relatively fewer audio/video frames), or a state of sufficient cache occupation (indicating the current client player caches more audio/video frames).

In all embodiments of the present disclosure, after obtaining the storage state of the client based on the second determining result, the server may transmit the second media frame to the client through a data transfer scheme preset for the state of insufficient cache occupation or the state of sufficient cache occupation, thereby dynamically adjusting subsequent data transmission, improving data transmission efficiency, and improving an audio/video playing effect. The second media frame may be a new media frame, or may be a retransmitted first media frame. The new media frame is a media frame that needs to be transmitted subsequently after the first media frame is transmitted.

In all embodiments of the present disclosure, the cache usage data includes: a quantity of media frames buffered in the cache (i.e., a buffering quantity) and a buffering duration of media frames in the cache.

In all embodiments of the present disclosure, the obtaining cache usage data based on the determining and a media frame currently played by the data receiving end may preferably include:

determining, when the determining indicates that there is at least one playable frame in the at least one first media frame, based on a playing time of each of the at least one playable frame, a target frame from the at least one playable frame, a playing time of the target frame meeting a preset condition;

obtaining the buffering duration based on the media frame currently played by the data receiving end and the playing time of the target frame; and

determining a quantity of the at least one playable frame as the buffering quantity.

In all embodiments of the present disclosure, the target frame meeting the preset condition may be preferably configured as a playable frame having a maximum pts in the at least one playable frame, namely an audio/video frame in which play_bool = 1 and a value of the pts is maximum, but is not limited thereto.

In all embodiments of the present disclosure, the buffering duration of the audio/video frames cached in the client may be preferably determined according to a difference between a playing time of the audio/video frame currently played by the client and a playing time of the target frame, but is not limited thereto.

For example, the server determines an audio/video frame (marked as frame_cur) currently played by the client, determines a pts (marked as pts_cur) of the audio/video frame currently played by the client, then uses a playable frame having a maximum pts in the at least one playable frame as a target frame based on the pts of the at least one playable frame, and calculates, based on the pts (marked as pts_max) of the target frame and pts_cur, buffering duration (marked as frame_time_len) of the audio/video frames cached in the client by using formula (1):

$$\text{frame\_time\_len} = \text{pts\_max} - \text{pts\_cur} \quad \text{formula (1)}.$$

In all embodiments of the present disclosure, the audio/video frame currently played by the client may be fed back by the client to the server in real time, but is not limited thereto.

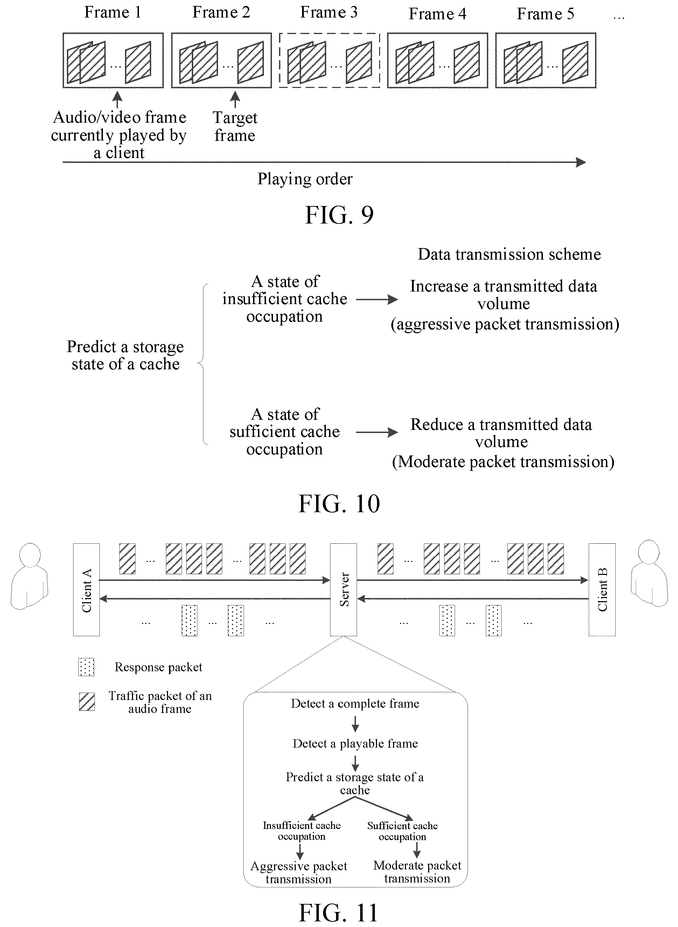

For example, as shown in FIG. 9, playable frames include a frame 1 and a frame 2, and pts of the frame 1 and the frame 2 is respectively 50 and 51. An audio/video frame currently played by the client is the frame 1. The server determines the audio/video frame currently played by the client, determines that a value of the pts of the audio/video frame currently played by the client is 50 (that is, pts_cur = 50), and then uses, based on the respective pts of the frame 1 and the frame 2, the frame 2 having the maximum pts in the frame 1 and the frame 2 as a target frame. Based on the pts of the target frame (that is, pts_max = 51) and pts_cur, the buffering duration of the audio/video frames cached in the client is frame_time_len = 51 - 50 = 1 ms.

In all embodiments of the present disclosure, the buffering quantity of audio/video frames cached in the client may be preferably predicted including:
when determining that there is at least one playable frame exists in the at least one complete frame, the server obtains a buffering quantity (denoted as frame_buffer_amount) of audio/video frames cached in the client based on a quantity of the at least one playable frame and an audio/video frame currently played by the client.

In all embodiments of the present disclosure, the server may use a quantity of playable frames, whose corresponding pts is not less than pts_cur, in the at least one playable frame as the buffering quantity of audio/video frames cached in the client. For example, still referring to FIG. 9, pts_cur = 50, and playable frames include a frame 1 and a frame 2. The pts of the frame 1 and the frame 2 is respectively 50 and 51. Playable frames whose corresponding pts is not less than pts_cur include the frame 1 and the frame 2, and the buffering quantity of audio/video frames cached in the client is 2.

In all embodiments, to reduce occupied space of an internal memory and improve audio/video frame detection efficiency, if the server detects that a video frame has been played on a player of the client, that is, the pts of the audio/video frame is less than pts_cur, related information of the audio/video frame is deleted from the state information table. Correspondingly, when the buffering quantity of audio/video frames cached in the client is predicted, the buffering quantity of playable frames included in the state information table may be used as the buffering quantity of audio/video frames cached in the client.

In all embodiments of the present disclosure, after the buffering quantity and the buffering duration of the audio/video frames cached in the client are predicted, based on the buffering quantity and the buffering duration of the audio/video frames cached in the client, there are the following two possible storage states.

First possible state: it is determined that the storage state is insufficient cache occupation, when the buffering duration is less than a preset first duration threshold and the buffering quantity is less than a preset first quantity threshold.

The preset condition of insufficient cache occupation is met when at least one of the following conditions is met:

condition a: buffering duration (frame_time_len) < buffering duration threshold (frame_time_len_thres); and

condition b: buffering quantity (frame_buffer_amount) < buffering quantity threshold (frame_buffer_amount_thres).

The frame_time_len_thres and frame_buffer_amount_thres may be configured by an administrator and embodied in a configuration file. For example, by default, frame_time_len_thres = 100 ms, and frame_buffer_amount_thres = 5.

Second possible state: it is determined that the storage state is sufficient cache occupation, when the buffering duration is greater than a preset second duration threshold and the buffering quantity is greater than a preset second quantity threshold.

The preset condition of sufficient cache occupation is met when at least one of the following conditions is met:

condition c: frame_time_len > N * frame_time_len thres; and
condition d: frame_buffer_amount > N * frame_buffer_amount_thres.

A value of N is a positive integer, and N may be configured by an administrator and embodied in the configuration file. For example, by default, N=5.

S305: Transmit, by invoking a preset data transfer scheme corresponding to the storage state, a second media frame to the data receiving end through the data transfer scheme, the second media frame being different from the plurality of first media frames, or the second media frame including the at least one first media frame.

In all embodiments of the present disclosure, the server provides a queryable database. The database includes a data transfer scheme look-up table (LUT), which stores a plurality of storage states and a plurality of preset data transfer schemes and mapping relationships therebetween, and a corresponding data transfer scheme may be obtained through querying according to a storage state of a cache obtained through previous prediction.

In all embodiments of the present disclosure, the transmitting a second media frame to the data receiving end through the data transfer scheme preset for the storage state includes:

determining an initial transmission parameter based on network transmission performance between a data transmitting end and the data receiving end;

adjusting the initial transmission parameter based on the data transfer scheme, to obtain a target transmission parameter; and

transmitting the second media frame to the data receiving end based on the target transmission parameter.

In all embodiments of the present disclosure, the transmission parameter includes at least one of a transmission rate and a transmission window, but is not limited thereto. The transmission rate in the initial transmission parameter is denoted as pacing_cpt, and the transmission window in the initial transmission parameter is denoted as cwnd_cpt. pacing_cpt and cwnd_cpt may be calculated by using a congestion control algorithm. A specific congestion control algorithm is not limited, and details are not described herein. The transmission rate in the target transmission parameter is denoted as Pacing_final, and the transmission window in the target transmission parameter is denoted as Cwnd_final.

In all embodiments of the present disclosure, for the state of insufficient cache occupation and the state of sufficient cache occupation, different data transfer schemes may be used for data transmission. Data transmission in the state of insufficient cache occupation and the state of sufficient cache occupation are separately described below.

Referring to FIG. 10, if a storage state indicates that the client is in a state of insufficient cache occupation, the initial transmission parameter is adjusted according to a data transfer scheme of increasing a transmitted data volume, to obtain the target transmission parameter.

In all embodiments of the present disclosure, the data transfer scheme of increasing a transmitted data volume includes: enlarging a traffic transmission window, or retransmitting data of the lost packet in case of a packet loss. This is also referred to as an aggressive packet transmission policy, to pursue for that more audio/video frames are cached in the client player at the same time.

For example, Pacing_final may be calculated through formula (2), and Cwnd_final may be calculated through formula (3):

$$\text{Cwnd\_final} = \text{cwnd\_cpt} * \text{cwnd\_gain\_weight\_1 formula (2)};$$

and

$$\text{Pacing\_final} = \text{pacing\_cpt} * \text{pacing\_gain\_weight\_1 formula (3)},$$

where cwnd_gain_weight_1 is a first weight corresponding to cwnd_cpt, pacing_gain_weight_1 is a first weight corresponding to pacing_cpt, and cwnd_gain_weight_1 and pacing_gain_weight_1 may be configured by an administrator and may be embodied in a configuration manual. For example, by default, pacing_gain_weight_1 = cwnd_gain_weight_1 = 1.5.

In all embodiments of the present disclosure, when the storage state indicates that the client is in a state of insufficient cache occupation, the server may alternatively perform a packet loss repair operation in an aggressive mode. Specifically, for a packet loss, the server may retransmit M copies of same packet loss data in a redundancy retransmission mode. The M copies of packet loss data may be transmitted at the same time, or may be transmitted at an interval of smooth round-trip time (SRTT)/2. The SRTT indicates a smooth RTT, and the SRTT may be obtained through measurement by the server. Packet loss measurement may be implemented by using algorithms such as forward acknowledgment (FACK) and time-based packet loss measurement (recent acknowledgment (RACK)), but is not limited thereto.

In all embodiments of the present disclosure, if a storage state indicates that the client is in a state of sufficient cache occupation, the initial transmission parameter is adjusted according to a data transfer scheme of reducing a transmitted data volume, to obtain the target transmission parameter.

In all embodiments of the present disclosure, the data transfer scheme of reducing a transmitted data volume includes: decreasing a traffic transmission window, decreasing a transmission rate of traffic transmission, or decreasing a size of a traffic packet set. This is also referred to as a moderate packet transmission policy, to expect that a loss of transmitted traffic packets is reduced as far as possible.

For example, Pacing_final may be calculated through formula (4), and Cwnd_final may be calculated through formula (5):

$$\text{Cwnd\_final} = \text{cwnd\_cpt} * \text{cwnd\_gain\_weight\_2} \quad \text{formula (4);}$$

and

$$\text{Pacing\_final} = \text{pacing\_cpt} * \text{pacing\_gain\_weight\_2} \quad \text{formula (5),}$$

where cwnd_gain_weight_2 is a second weight corresponding to cwnd_cpt, pacing_gain_weight_2 is a second weight corresponding to pacing_cpt, and cwnd_gain_weight_2 and pacing_gain_weight_2 may be configured by an administrator and may be embodied in a configuration manual. For example, by default, pacing_gain_weight_2 = cwnd_gain_weight_2 = 0.75.

In all embodiments of the present disclosure, when the client caches fewer audio/video frames, the data transmitting end may purse, in an "appropriately aggressive" data transmission mode (for example, by enlarging the traffic transmission window), for that more audio/video frames are cached in the client player at the same time. Alternatively, against a packet loss, the data transmitting end uses a "more radial" data transmission mode (for example, a policy of retransmission in case of a packet loss) to ensure that a lost traffic packet is repaired in a time as short as possible. Therefore, Cwnd_final obtained based on cwnd_gain_weight_2 needs to be less than Cwnd_final obtained based on cwnd_gain_weight_1, and Pacing_final obtained based on pacing_gain_weight_2 needs to be less than Pacing_final obtained based on pacing_gain_weight_1.

In all embodiments of the present disclosure, when the storage state indicates that the client is in a state of sufficient cache occupation, the server may further perform tasks such as bandwidth probing or minimum delay probing on the server. For example, in the BBR algorithm, the server performs at least one of a bandwidth probing (ProbeBW) operation or a delay probing (ProbeRTT) operation, to obtain at least one of latest bandwidth and delay information. Values of parameters involved in a moderate packet transmission policy may be determined based on the latest bandwidth and delay information.

Based on the foregoing embodiment, compared with a method of adjusting a transmission and retransmission policy only for a network state (such as a packet loss rate or an available bandwidth), the present disclosure enables the data transmitting end to predict a capability of caching audio/video data by a player of a user terminal, and a traffic transmission and control policy of the transmitting end is adaptively adjusted for information such as a quantity and duration of audio/video frames cached by the player. This can solve a problem of client stuttering to a large extent, and improve service experience such as stuttering of the user terminal in an audio/video live streaming scenario.

The present disclosure is described below with reference to a specific embodiment.

Using an online conference scenario as an example, referring to FIG. 11, a client A of an user A, a client B of an user B, a client B of an user C, and a server configured to provide a voice call service are included in the application scenario. The user A is a conference speaker. For example, the client A, the client B, and the client C are all mobile phone clients.

The client A obtains each audio frame through a device having an audio recording function, encodes each audio frame, and then uploads each encoded audio frame to the server. After receiving each encoded audio frame, the server obtains each audio frame through decoding.

After receiving a conference attendance request from the client B of the user B, the server transmits each traffic packet in a traffic packet set of each audio/video frame to the client B, and separately receives response packets returned by the client B. Then, when determining, based on each response packet, that the client B receives at least one complete frame in the audio/video frames, the server detects, from the at least one complete frame based on a playing order of the audio/video frames, a playable frame that supports complete playing by the client B.

Further, based on a detection result of a playable frame, the storage state of the cache in the player of the client B is determined.

In a first case, the storage state of the client B is a state of insufficient cache occupation, and a third audio/video frame is transmitted to the client B according to a data transfer scheme of increasing a transmitted data volume (such as the foregoing aggressive packet transmission and redundancy retransmission).

In a second case, a storage state of the client B is a state of sufficient cache occupation, and a new third audio/video frame is transmitted to the client B according to a data transfer scheme of reducing a transmitted data volume (such as the foregoing moderate packet transmission and network probing).

In a third case, a storage state of the client B is neither a state of sufficient cache occupation nor a state of insufficient cache occupation, and a previous data transfer scheme may not be changed, or a third audio/video frame is transmitted to the client B according to a data transfer scheme based on a conventional congestion control algorithm.

Similarly, after receiving a conference attendance request from the client C of the user C, the server transmits each traffic packet in a traffic packet set of each audio/video frame to the client C, and separately receives response packets returned by the client C. Then, according to the response packets returned by the client C, an audio/video frame that is completely received by the client C is predicted, and an audio/video frame that supports complete playing by the client C is predicted. Then, according to the predicted audio/video frame that is completely received by the client C and the audio/video frame that supports complete playing by the client C, the storage state of the cache in the player of the client is obtained, and then the third audio/video frame is transmitted to the client C through the data transfer scheme preset for the storage state.

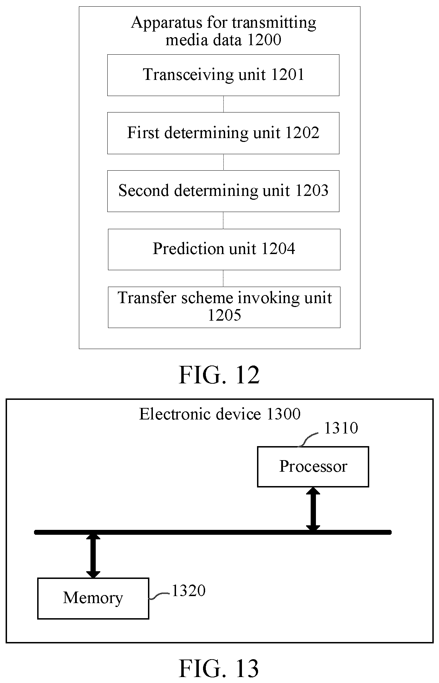

Based on the same inventive concept, an embodiment of the present disclosure provides an apparatus for transmitting media data. FIG. 12 is a schematic structural diagram of an apparatus for transmitting media data 1200, which may include:

a transceiving unit 1201, configured to transmit a plurality of traffic packet sets each corresponding to one of a plurality of first media frames to a data receiving end, and receive a response packet from the data receiving end, the response packet indicating media frame data of at least one first media frame is received by the data receiving end;

a determining unit, configured to determine, according to a preset playing order of the plurality of first media frames, whether the data receiving end is capable of playing each of the at least one first media frame;

a prediction unit 1204, configured to configured to predict a storage state of a storage unit of the data receiving end based on the determining; and

a transfer scheme invoking unit 1205, configured to transmit, by invoking a preset data transfer scheme corresponding to the storage state, a second media frame to the data receiving end through the data transfer scheme, the second media frame being different from the plurality of first media frames, or the second media frame comprising the at least one first media frame.

In all embodiments of the present disclosure, the determining unit comprises a first determining unit 1202 and a second determining unit 1203,

the first determining unit 1202 is configured to perform, based on the at least one first media frame indicated by the response packet, a first determining operation on whether media frame data of the plurality of first media frames is received by the data receiving end;

the second determining unit 1203 is configured to for each first media frame, detect, when it is determined based on the playing order that at least one other media frame that is before the respective first media frame exists among the plurality of first media frames, whether the data receiving end is capable of playing the respective first media frame, based on a first determining result of the first determining operation respectively corresponding to the at least one other media frame.

In all embodiments of the present disclosure, the second determining unit 1203 is specifically configured to determine that a client running in the data receiving end is capable of playing the respective first media frame, when it is determined, based on the first determining result respectively corresponding to the at least one other media frame, that the data receiving end receives each of the at least one other media frame, or determine that the client is incapable of playing the respective first media frame, when it is determined, based on the first determining result respectively corresponding to the at least one other media frame, that a media frame in the at least one other media frame is not received by the data receiving end.

In all embodiments of the present disclosure, the prediction unit 1204 is specifically configured to obtain cache usage data based on the determining and a media frame currently played by the data receiving end; and determine the storage state based on the cache usage data.

In all embodiments of the present disclosure, the cache usage data includes: a buffering quantity and a buffering duration of media frames buffered in a cache; and

the prediction unit 1204 is specifically configured to determine, when the determining indicates that there is at least one playable frame in the at least one first media frame, based on a playing time of each of the at least one playable frame, a target frame from the at least one playable frame, a playing time of the target frame meeting a preset condition; obtain the buffering duration based on the media frame currently played by the data receiving end and the playing time of the target frame; and determine a quantity of the at least one playable frame as the buffering quantity.

In all embodiments of the present disclosure, the prediction unit 1204 is specifically configured to: determine that the storage state is insufficient cache occupation, when the buffering duration is less than a preset first duration threshold and the buffering quantity is less than a preset first quantity threshold, or determine that the storage state is sufficient cache occupation, when the buffering duration is greater than a preset second duration threshold and the buffering quantity is greater than a preset second quantity threshold.

In all embodiments of the present disclosure, the transfer scheme invoking unit 1205 is specifically configured to determine an initial transmission parameter based on network transmission performance between a data transmitting end and the data receiving end; adjust the initial transmission parameter based on the data transfer scheme, to obtain a target transmission parameter; and transmit the second media frame to the data receiving end based on the target transmission parameter.

In all embodiments of the present disclosure, the transfer scheme invoking unit 1205 is specifically configured to: adjust, when the storage state indicates insufficient cache occupation, the initial transmission parameter according to a data transfer scheme of increasing a transmitted data volume, to obtain the target transmission parameter; or adjust, when the storage state indicates sufficient cache occupation, the initial transmission parameter according to a data transfer scheme of reducing a transmitted data volume, to obtain the target transmission parameter.

In all embodiments of the present disclosure, the second determining unit 1203 is further configured to obtain a packet identifier set recorded locally for each of the plurality of first media frames, the packet identifier set comprising a plurality of packet identifiers each corresponding to one of a plurality of traffic packets in a traffic packet set of the respective first media frame, and the plurality of packet identifiers being obtained by numbering according to a transmission order of the plurality of traffic packets; and determine the playing order based on the plurality of packet identifiers comprised in each packet identifier set.

In all embodiments of the present disclosure, the first determining unit 1202 is specifically configured to obtain a packet identifier set recorded locally for each of the plurality of first media frames, the packet identifier set comprising a plurality of packet identifiers each corresponding to one of a plurality of traffic packets in a traffic packet set of the respective first media frame, and the plurality of packet identifiers being obtained by numbering according to a transmission order of the plurality of traffic packets; and determine that the data receiving end receives media frame data of the at least one first media frame, based on the plurality of packet identifiers comprised in each packet identifier set and a plurality of packet identifiers carried by the response packet.

For ease of description, the foregoing parts are divided into modules (or units) based on functions for respective description. In embodiments of the present disclosure, the functions of the modules (units) may be implemented in the same piece of or more pieces of software or hardware.

Specific request execution manners of the units in the apparatus in the foregoing embodiment have been described in detail in the embodiment about the method, and details are not described herein.

A person skilled in the art can understand that the aspects of the present disclosure may be implemented as systems, methods, or program products. Therefore, the aspects of the present disclosure may be specifically implemented in the following forms: hardware only implementations, software only implementations (including firmware, micro code, and the like), or implementations with a combination of software and hardware, which are collectively referred to as a "circuit", a "module", or a "system" herein.

Based on the same inventive concept, an embodiment of the present disclosure further provides an electronic device. In an embodiment, the electronic device may be a data transmitting end or a terminal device. FIG. 13 is a schematic structural diagram of a possible electronic device according to an embodiment of the present disclosure. As shown in FIG. 13, an electronic device 1300 includes a processor 1310 and a memory 1320.

The memory 1320 stores a computer program that can be executed by the processor 1310. The processor 1310 may perform the operations of the above-mentioned method for transmitting media data by executing instructions stored in the memory 1320.

The memory 1320 may be a volatile memory, for example, a random access memory (RAM). The memory 1320 may alternatively be a non-volatile memory, for example, a read-only memory (ROM), a flash memory, a hard disk drive (HDD), or a solid-state drive (SSD). Alternatively, the memory 1320 is any other medium that can be configured to carry or store desired program code in the form of an instruction or a data structure and that can be accessed by a computer, but is not limited thereto. The memory 1320 may alternatively be a combination of the foregoing memories.

The processor 1310 may include at least one central processing unit (CPU) or be a digital processing unit, or the like. The processor 1310 is configured to implement the above-mentioned method for transmitting media data when executing the computer program stored in the memory 1320.

In some embodiments, the processor 1310 and the memory 1320 may be implemented on the same chip. In some embodiments, the processor and the memory may alternatively be implemented separately on independent chips.

A specific connection medium between the processor 1310 and the memory 1320 is not limited in all embodiments of the present disclosure. In all embodiments of the present disclosure, an example in which the processor 1310 is connected to the memory 1320 by a bus is used, and the bus is described with a thick line in FIG. 13. Connection modes between other components are only for schematic illustration and are not used for a limitation. The bus may include an address bus, a data bus, a control bus, or the like. For ease of description, only one thick line is used in FIG. 13 for description, but there is no description of only one bus or one type of bus.

Based on the same inventive concept, an embodiment of the present disclosure provides a computer-readable storage medium, including a computer program, when the computer program is run on an electronic device, the computer program being used for causing the electronic device to perform the operations of the method for transmitting media data described above. In some embodiments, various aspects of the method for transmitting media data according to the present disclosure may alternatively be implemented in the form of a program product, which includes a computer program. When the program product is run on an electronic device, the computer program is used for causing the electronic device to perform the operations of the above-mentioned method for transmitting media data. For example, the electronic device may perform the operations shown in FIG. 3.

The program product may use a readable medium or any combination of more readable media. The readable medium may be a readable signal medium or a readable storage medium. The readable storage medium may be, for example, but is not limited to, an electric, magnetic, optical, electromagnetic, infrared, or semiconductor system, apparatus, or device, or any combination thereof. More specific examples (a non-exhaustive list) of readable storage media include: an electrical connection having at least one wires, a portable disk, a hard disk drive, an RAM, an ROM, an erasable programmable read-only memory (EPROM or a flash memory), an optical fiber, a portable compact disc read-only memory (CD-ROM), an optical storage device, a magnetic storage device, or any appropriate combination thereof.

The program product according to embodiments of the present disclosure may use a CD-ROM and include a computer program, and can be run on an electronic device. However, the program product of the present disclosure is not limited thereto. Herein, the readable storage medium may be any tangible medium containing or storing a computer program, and the computer program may be used by or in combination with a command execution system, apparatus, or device.

The readable signal medium may include a data signal propagated in a baseband or as a part of a carrier, and a readable computer program is carried therein. The propagated data signal may be in various forms, including but not limited to an electromagnetic signal, an optical signal, or any appropriate combination thereof. The readable signal medium may alternatively be any readable medium other than the readable storage medium. The readable medium can send, propagate, or transmit a computer program used by or in combination with a command execution system, apparatus, or device.

Although exemplary embodiments of the present disclosure have been described, once persons skilled in the art know the basic creative concept, they can make additional changes and modifications to these embodiments.

**Claims**

1. A method for transmitting media data, executable by an electronic device, comprising:

transmitting a plurality of traffic packet sets each corresponding to one of a plurality of first media frames to a data receiving end, and receiving a response packet from the data receiving end, the response packet indicating media frame data of at least one first media frame is received by the data receiving end;
determining, according to a preset playing order of the plurality of first media frames, whether the data receiving end is capable of playing each of the at least one first media frame;
predicting a storage state of a storage unit of the data receiving end based on the determining; and
transmitting, by invoking a preset data transfer scheme corresponding to the storage state, a second media frame to the data receiving end through the data transfer scheme, the second media frame being different from the plurality of first media frames, or the second media frame comprising the at least one first media frame.

2. The method according to claim 1, wherein the determining, according to a preset playing order of the plurality of first media frames, whether the data receiving end is capable of playing each of the at least one first media frame comprises:

performing, based on the at least one first media frame indicated by the response packet, a first determining operation on whether media frame data of the plurality of first media frames is received by the data receiving end; for each first media frame:
detecting, when it is determined based on the playing order that at least one other media frame that is before the respective first media frame exists among the plurality of first media frames, whether the data receiving end is capable of playing the respective first media frame, based on a first determining result of the first determining operation respectively corresponding to the at least one other media frame.

3. The method according to claim 2, wherein the detecting whether the data receiving end is capable of playing the respective first media frame, based on a first determining result of the first determining operation respectively corresponding to the at least one other media frame comprises:

determining that a client running in the data receiving end is capable of playing the respective first media frame, when it is determined, based on the first determining result respectively corresponding to the at least one other media frame, that the data receiving end receives each of the at least one other media frame, or
determining that the client is incapable of playing the respective first media frame, when it is determined, based on the first determining result respectively corresponding to the at least one other media frame, that a media frame in the at least one other media frame is not received by the data receiving end.

4. The method according to claim 1, 2, or 3, wherein the predicting a storage state of a storage unit of the data receiving end based on the determining comprises:

obtaining cache usage data based on the determining and a media frame currently played by the data receiving end; and
determining the storage state based on the cache usage data.

5. The method according to claim 4, wherein the cache usage data comprises: a buffering quantity and a buffering duration of media frames buffered in a cache; and
the obtaining cache usage data based on the determining and a media frame currently played by the data receiving end comprises:

determining, when the determining indicates that there is at least one playable frame in the at least one first media frame, based on a playing time of each of the at least one playable frame, a target frame from the at least one playable frame, a playing time of the target frame meeting a preset condition;
obtaining the buffering duration based on the media frame currently played by the data receiving end and the playing time of the target frame; and
determining a quantity of the at least one playable frame as the buffering quantity.

6. The method according to claim 5, wherein the determining the storage state based on the cache usage data comprises:

determining that the storage state is insufficient cache occupation, when the buffering duration is less than a preset first duration threshold and the buffering quantity is less than a preset first quantity threshold, or
determining that the storage state is sufficient cache occupation, when the buffering duration is greater than a preset second duration threshold and the buffering quantity is greater than a preset second quantity threshold.

7. The method according to claim 1, 2, or 3, wherein the transmitting a second media frame to the data receiving end through the data transfer scheme comprises:

determining an initial transmission parameter based on network transmission performance between a data transmitting end and the data receiving end;

adjusting the initial transmission parameter based on the data transfer scheme, to obtain a target transmission parameter; and

transmitting the second media frame to the data receiving end based on the target transmission parameter.

8. The method according to claim 7, wherein the adjusting the initial transmission parameter based on the data transfer scheme, to obtain a target transmission parameter comprises:

adjusting, when the storage state indicates insufficient cache occupation, the initial transmission parameter according to a data transfer scheme of increasing a transmitted data volume, to obtain the target transmission parameter; or

adjusting, when the storage state indicates sufficient cache occupation, the initial transmission parameter according to a data transfer scheme of reducing a transmitted data volume, to obtain the target transmission parameter.

9. The method according to claim 1, 2, or 3, wherein the playing order of the plurality of first media frames is determined, comprising:

obtaining a packet identifier set recorded locally for each of the plurality of first media frames, the packet identifier set comprising a plurality of packet identifiers each corresponding to one of a plurality of traffic packets in a traffic packet set of the respective first media frame, and the plurality of packet identifiers being obtained by numbering according to a transmission order of the plurality of traffic packets; and

determining the playing order based on the plurality of packet identifiers comprised in each packet identifier set.

10. The method according to claim 1, 2, or 3, further comprising:

obtaining a packet identifier set recorded locally for each of the plurality of first media frames, the packet identifier set comprising a plurality of packet identifiers each corresponding to one of a plurality of traffic packets in a traffic packet set of the respective first media frame, and the plurality of packet identifiers being obtained by numbering according to a transmission order of the plurality of traffic packets; and

determining that the data receiving end receives media frame data of the at least one first media frame, based on the plurality of packet identifiers comprised in each packet identifier set and a plurality of packet identifiers carried by the response packet.

11. An apparatus for transmitting media data, comprising:

a transceiving unit, configured to transmit a plurality of traffic packet sets each corresponding to one of a plurality of first media frames to a data receiving end, and receive a response packet from the data receiving end, the response packet indicating media frame data of at least one first media frame is received by the data receiving end;

a determining unit, configured to determine, according to a preset playing order of the plurality of first media frames, whether the data receiving end is capable of playing each of the at least one first media frame;

a prediction unit, configured to predict a storage state of a storage unit of the data receiving end based on the determining; and

a transfer scheme invoking unit, configured to transmit, by invoking a preset data transfer scheme corresponding to the storage state, a second media frame to the data receiving end through the data transfer scheme, the second media frame being different from the plurality of first media frames, or the second media frame comprising the at least one first media frame.

12. The apparatus according to claim 11, wherein the determining unit comprises a first determining unit and a second determining unit,

the first determining unit is configured to perform, based on the at least one first media frame indicated by the response packet, a first determining operation on whether media frame data of the plurality of first media frames is received by the data receiving end;

the second determining unit is configured to for each first media frame, detect, when it is determined based on the playing order that at least one other media frame that is before the respective first media frame exists among the plurality of first media frames, whether the data receiving end is capable of playing the respective first media frame, based on a first determining result of the first determining operation respectively corresponding to the at least one other media frame.

13. The apparatus according to claim 12, wherein the second determining unit is configured to determine that a client running in the data receiving end is capable of playing the respective first media frame, when it is determined, based on the first determining result respectively corresponding to the at least one other media frame, that the data receiving end receives each of the at least one other media frame, or determine that the client is incapable of playing the respective first media frame, when it is determined, based on the first determining result respectively corresponding to the at least one other media frame, that a media frame in the at least one other media frame is not received by the data receiving end.

14. The apparatus according to claim 11, 12, or 13, wherein the prediction unit is configured to obtain cache usage data based on the determining and a media frame currently played by the data receiving end; and determine the storage state based on the cache usage data.

15. The apparatus according to claim 11, 12, or 13, wherein the transfer scheme invoking unit is configured to determine an initial transmission parameter based on network transmission performance between a data transmitting end and the data receiving end; adjust the initial transmission parameter based on the data transfer scheme, to obtain a target transmission parameter; and transmit the second media frame to the data receiving end based on the target transmission parameter.

16. The apparatus according to claim 11, 12, or 13, wherein the determining unit is further configured to obtain a packet identifier set recorded locally for each of the plurality of first media frames, the packet identifier set comprising a plurality of packet identifiers each corresponding to one of a plurality of traffic packets in a traffic packet set of the respective first media frame, and the plurality of packet identifiers being obtained by numbering according to a transmission order of the plurality of traffic packets; and determine the playing order based on the plurality of packet identifiers comprised in each packet identifier set.

17. The apparatus according to claim 11, 12, or 13, wherein the determining unit is configured to obtain a packet identifier set recorded locally for each of the plurality of first media frames, the packet identifier set comprising a plurality of packet identifiers each corresponding to one of a plurality of traffic packets in a traffic packet set of the respective first media frame, and the plurality of packet identifiers being obtained by numbering according to a transmission order of the plurality of traffic packets; and determine that the data receiving end receives media frame data of the at least one first media frame, based on the plurality of packet identifiers comprised in each packet identifier set and a plurality of packet identifiers carried by the response packet.

18. An electronic device, comprising a processor and a memory, the memory having a computer program stored therein, and the computer program, when executed by the processor, causing the processor to perform the operations of the method according to any one of claims 1 to 10.

19. A computer-readable storage medium, comprising a computer program, when the computer program is run on an electronic device, the computer program being configured for causing the electronic device to perform the operations of the method according to any one of claims 1 to 10.

20. A computer program product, comprising a computer program, the computer program being stored in a computer-readable storage medium, and a processor of an electronic device reading the computer program from the computer-readable storage medium and executing the computer program, to cause the electronic device to perform the operations of the method according to any one of claims 1 to 10.

FIG. 1

FIG. 2

S301

Transmit a plurality of traffic packet sets each corresponding to one of a plurality of first media frames to a data receiving end, and receive a response packet from the data receiving end, the response packet indicating media frame data of at least one first media frame is received by the data receiving end

S302

Perform, based on the at least one first media frame indicated by the response packet, a first determining operation on whether media frame data of the first media frames is received by the data receiving end

S303

Determine, according to a preset playing order of the plurality of first media frames, whether the data receiving end is capable of playing each of the at least one first media frame

S304

Predict a storage state of a storage unit of the data receiving end based on the determining

S305

Transmit, by invoking a preset data transfer scheme corresponding to the storage state, a second media frame to the data receiving end through the data transfer scheme, the second media frame being different from the plurality of first media frames, or the second media frame including the at least one first media frame

FIG. 3

Frame 4  Frame Frame  Frame 3
2  4

401  402

Cloud server  74 73 72  69  63 62 61 60  52 51 50  Viewer client

FIG. 4

501  502

Cloud server  50  52  60 61 62 63  69  72 73 74  Viewer client

Return an ACK packet

FIG. 5

Traffic
packet
50 51 52 53 54 55 56 57 58 59 60

Response
packet
50  52 53 54 55 56 57 58 59 60

FIG. 6A

## FIG. 6B

| Frame type | Playing time | Packet number | Complete reception | Complete playing |
|---|---|---|---|---|
| Video P frame | 0 | 50, 51, ..., and 60 | 0 | 0 |

Complete reception ↓

| Frame type | Playing time | Packet number | Complete reception | Complete playing |
|---|---|---|---|---|
| Video P frame | 0 | 50, 51, ..., and 60 | 1 | 0 |

Complete playing ↓

| Frame type | Playing time | Packet number | Complete reception | Complete playing |
|---|---|---|---|---|
| Video P frame | 0 | 50, 51, ..., and 60 | 1 | 1 |

## FIG. 7

| | Frame 1 | Frame 2 | Frame 3 | Frame 4 | Frame 5 | ... |
|---|---|---|---|---|---|---|
| Rec_bool | 1 | 1 | 0 | 1 | 1 | |
| Play_bool | 1 | 1 | 0 | 0 | 0 | |

Playing order

## FIG. 8

Frame 1    Frame 2    Frame 3    Frame 4    Frame 5    ...

Audio/video frame
currently played by
a client

Target
frame

Playing order

## FIG. 9

Data transmission scheme

Predict a storage
state of a cache

A state of
insufficient cache
occupation

→

Increase a transmitted data
volume
(aggressive packet transmission)

A state of
sufficient cache
occupation

→

Reduce a transmitted data
volume
(Moderate packet transmission)

## FIG. 10

Client A

Server

Client B

Response packet

Traffic packet of an
audio frame

Detect a complete frame

↓

Detect a playable frame

↓

Predict a storage state of a
cache

Insufficient cache
occupation

Sufficient cache
occupation

↓

Aggressive packet
transmission

↓

Moderate packet
transmission

## FIG. 11

Apparatus for transmitting
media data 1200

Transceiving unit 1201

First determining unit 1202

Second determining unit 1203

Prediction unit 1204

Transfer scheme invoking unit
1205

FIG. 12

Electronic device 1300

1310

Processor

Memory ~1320

FIG. 13

# INTERNATIONAL SEARCH REPORT

| International application No. |
| --- |
| **PCT/CN2023/134541** |

### A. CLASSIFICATION OF SUBJECT MATTER

H04L65/613(2022.01)i

According to International Patent Classification (IPC) or to both national classification and IPC

### B. FIELDS SEARCHED

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNTXT, VEN, ENTXTC, CJFD, CNKI: 预测, 预估, 存储, 缓存, 缓冲, 空间, 状态, 大小, 调用, 调整, 多媒体, 播放, 传输, 发送, predict+, cache, buffer, state

### C. DOCUMENTS CONSIDERED TO BE RELEVANT

| Category* | Citation of document, with indication, where appropriate, of the relevant passages | Relevant to claim No. |
| --- | --- | --- |
| A | CN 115802078 A (MIGU VIDEO TECHNOLOGY CO., LTD. et al.) 14 March 2023 (2023-03-14) description, paragraphs [0003]-[0188] | 1-20 |
| A | CN 103338393 A (XI'AN JIAOTONG UNIVERSITY) 02 October 2013 (2013-10-02) entire document | 1-20 |
| A | CN 103475934 A (POWERINFO CO., LTD.) 25 December 2013 (2013-12-25) entire document | 1-20 |
| A | CN 108881931 A (TENCENT TECHNOLOGY (SHENZHEN) CO., LTD.) 23 November 2018 (2018-11-23) entire document | 1-20 |
| A | CN 109168083 A (QINGDAO HISENSE ELECTRIC CO., LTD.) 08 January 2019 (2019-01-08) entire document | 1-20 |
| A | CN 113038187 A (CENTRAL SOUTH UNIVERSITY et al.) 25 June 2021 (2021-06-25) entire document | 1-20 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **17 January 2024** | **24 January 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/134541**

| Patent document cited in search report | | | Publication date (day/month/year) | Patent family member(s) | | | Publication date (day/month/year) |
|---|---|---|---|---|---|---|---|
| CN | 115802078 | A | 14 March 2023 | None | | | |
| CN | 103338393 | A | 02 October 2013 | None | | | |
| CN | 103475934 | A | 25 December 2013 | None | | | |
| CN | 108881931 | A | 23 November 2018 | US | 2019253470 | A1 | 15 August 2019 |
| | | | | US | 11146606 | B2 | 12 October 2021 |
| | | | | JP | 2020507235 | A | 05 March 2020 |
| | | | | JP | 6876131 | B2 | 26 May 2021 |
| | | | | WO | 2018210130 | A1 | 22 November 2018 |
| | | | | KR | 20190112780 | A | 07 October 2019 |
| | | | | KR | 102216622 | B1 | 17 February 2021 |
| | | | | EP | 3627791 | A1 | 25 March 2020 |
| CN | 109168083 | A | 08 January 2019 | None | | | |
| CN | 113038187 | A | 25 June 2021 | None | | | |

Form PCT/ISA/210 (patent family annex) (July 2022)

**EP 4 611 347 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310632510X